# EUROPÄISCHE PATENTSCHRIFT

(11) **EP 2 397 322 B1**
(45) Veröffentlichungstag und Bekanntmachung des Hinweises auf die Patenterteilung: **22.08.2018**
(21) Anmeldenummer: 11004929.3
(22) Anmeldetag: 16.06.2011
(51) Int. Cl.: F24D 3/14, B32B 13/04, B32B 5/18, B32B 5/24, B32B 5/26, E04C 2/52, B32B 3/08, E04F 15/02, F24D 3/16, F24F 5/00

(54) **Bauplatte mit eingebettetem Rohrstrang für ein Heiz-oder Kühlfluid**
Construction board with embedded pipeline conduit for a heating or cooling fluid
Panneau de construction doté d'une canalisation encastrée pour un fluide de chauffage ou de refroidissement

(30) Priorität: 18.06.2010 DE 202010009284 U
(43) Veröffentlichungstag der Anmeldung: 21.12.2011
(73) Patentinhaber: SANHA GmbH & Co. KG, 45219 Essen (DE)
(72) Erfinder: Plagemann, Markus, 48346 Ostbevern (DE)
(74) Vertreter: Bischof, Oliver

(56) Entgegenhaltungen:
- EP-A1- 0 666 383
- EP-A2- 1 065 451
- AT-U1- 6 507
- DE-A1- 2 814 004
- DE-A1- 3 209 520
- DE-A1-102006 024 354
- DE-B3-102007 031 418
- DE-U1- 29 620 051
- US-A1- 2010 010 139
- Anonymous: "VDB-Information", Verband Deutscher Betoningenieure E. V. , Nr. 87/01 1. Dezember 2001 (2001-12-01), XP002755927, Gefunden im Internet: URL:http://www.betoningenieure.de/Download s/info87_01.pdf [gefunden am 2016-03-30]

## Beschreibung

Die Erfindung betrifft eine Bauplatte mit eingebettetem Rohrstrang für ein Heiz- oder Kühlfluid, Heizkabel oder einer ähnlichen, eingebetteten, einen Wärmegradienten erzeugenden Vorrichtung für die Raumheizung oder -kühlung bei Anbringung an Wände, Decken oder Fußböden.

Bauplatten mit eingebautem Rohrstrang für Heizzwecke sind an sich bekannt. Es werden für eine solche Bauplatte u.a. verschiedene Materialien auf Mörtelbasis verwendet. Nachteil ist, dass der normale Bau- oder Zementmörtel relativ schlechte Wärmeleitungseigenschaften hat. Es werden daher auch vielfach Rohre für Heiz- oder Kühlfluide auf Schaumstoffplatten befestigt und anschließend in eine dünne Estrichlage eingegossen.
Für die Erfindung stellt sich die Aufgabe, eine für die Beheizung oder Kühlung von Wänden oder Fußböden bzw. Decken geeignete Bauplatte anzugeben, die wechselnde Temperaturbelastungen besser als die üblichen Polystyrol-Schaumstoffplatten ertragen und die Temperaturänderungen in relativ kurzen Abständen bei der den Wärmegradienten erzeugenden Vorrichtung gut folgen können.

Diese Aufgabe wird durch eine Bauplatte gemäß Anspruch 1 gelöst, die aus einer starren Mörtelplatte besteht, deren Mörtelmasse vor dem Erstarren ein wärmeleitungserhöhender, zu einem erheblichen Anteil aus elementarem Kohlenstoff bestehender Zuschlagsstoff beigemischt ist.
Vorzugsweise besteht der Rohrstrang aus einem Metallrohr, das die dem Fluid entstammende Wärme rasch abgibt oder - mutatis mutandis - in einem Fluid aufnimmt. Es können auch Verbundrohre, beispielsweise mit einem innen liegenden Metallrohr und einer außen liegenden Kunststoffbeschichtung, verwendet werden. Als Metall eignet sich beispielsweise korrosionsfester Stahl (Edelstahl) oder Kupfer.
Der dem Mörtel beigefügte Zuschlagsstoff ist mit den genannten Mörtel- und Rohrmaterialien gut verträglich, wenn es sich um einen Zuschlagsstoff handelt, der zu mehr als 30 Vol.-%, vorzugsweise ausschließlich, aus gemahlenem Steinkohlenkoks besteht. Eine Korngrößenverteilung des Zuschlagstoffes von 3,5 mm bis 0,02 mm hat sich als technisch vorteilhaft erwiesen.

Der Anteil an genannten Zuschlagsstoffen, der zu einem erheblichen Anteil aus elementarem Kohlenstoff bestehen, muss abgewogen werden mit seiner Verträglichkeit mit der Mörtelmasse, die die Basismasse darstellt. Hierbei hat sich ein Bereich von 25 bis 70 Vol.-% des Zuschlagstoffes in der Mörtelmasse als technisch sinnvoll erwiesen. Neben dem genannten C-haltigen Zuschlagstoff können auch andere Zuschlagstoffe beigefügt sein, wie Pigmente oder Fasern (Glaswolle, Polymer- oder Naturfasern), wobei letztere den Zusammenhalt der erstarrten Mörtelmasse verbessern.

Ein weiteres Kriterium ist die Wärmeleitfähigkeit λ der ausgehärteten Mörtelmasse. Diese sollte vorzugsweise bei einer Messtemperatur von 40 °C größer als 1,8 W/(m•K) sein.
Wesentlich ist auch eine gleichmäßige Erwärmung der Bauplatte, die üblicherweise in rechteckiger Form hergestellt wird. Dabei wird eine Ausführungsform für den Rohrstrang in Bezug auf die Bauplatte gewählt, wobei
- ein vom Einlass ausgehender und die Hälfte des Rohrstranges umfassender Teil des Rohrstranges einen Zulauf bildet,
- ein am Auslass endender und die zweite Hälfte des Rohrstranges umfassender Teil des Rohrstranges einen Ablauf bildet,
- wobei Zulauf und Ablauf in der Mörtelmasse in Form einer doppelten Kurvatur, nämlich als Spirale oder Mäanderlinie, geführt und vollständig eingebettet sind, bei der jeweils ein Teil der Zulaufleitung zu einem Teil der Ablaufleitung benachbart ist, und wobei Ein- und Auslass bei der Bauplatte auf derselben Seite liegen.
Erfindungsgemäß wird die Mörtelmasse in einem Rahmen gehalten, der gleichzeitig als Gussform für das Erstellen der Bauplatte dient. Der Rahmen besteht aus einem Flachprofil oder aus einem zur Innenseite der Bauplatte hin offenen Winkelprofil. Hierbei werden für das Material des Rahmens Metall- oder Kunststoffprofile verwendet, wobei das Metallprofil mit einer Kunststoff- oder Keramikbeschichtung versehen sein kann.

Zusätzlich kann die Mörtelmasse zwischen zwei auf die Mörtelmasse aufgelegten oder in den Rahmen eingespannten oder auf diesen aufgeklebten Flächengebilden gehalten sein. Auch kann die Auflage der Flächengebilde so platziert sein, dass sie nach dem Aushärten wieder entfernt werden.

Das Flächengebilde besteht vorzugsweise aus einem Flachabschnitt aus Kunststofffolie, Papier, Pappe oder Metallfolie oder Blech oder aus einem Verbundwerkstoff aus wenigstens zweier der vorgenannten Materialien.

Soll eine gute Verbindung zu einem anderen Schichtbestandteil erzeugt werden, so dann der Flachabschnitt auch aus einem Glasfaserverbund, nämlich aus Glasfaservlies oder aus einer Glasfaser-Gewebematte, bestehen. Grundsätzlich ist es nicht erforderlich auf beiden Seiten der Bauplatte ein Flächengebilde anzuordnen; in vielen Fällen reicht aus, nur die zunächst zuunterst liegende Fläche abzudichten, um den Verguss der Mörtelplatte herzustellen.

Innerhalb der Mörtelmasse kann weiterhin auch eine Armierung aus einem Vlies, einen Gewebe oder einem Gelege vorgesehen werden.

Ein weiterer bedeutender Fortschritt wird dadurch erzielt, dass die Mörtelschicht einseitig vor dem Einbau mit einer Kernschicht in Form einer Tafel belegt ist, die aus einem Leichtbaustoff besteht, nämlich aus Schaumglas, Schaumkunststoff oder aus Holzfasermaterial. Wird ein Schaumglas gewählt, so sollte dies eine Dichte zwischen 15 bis 200 kg/m³ besitzen.

Im vorliegenden Fall werden Schaumglas-Tafeln von einer Dicke zwischen 5 bis 50 mm verwendet, wobei selbstverständlich je nach Einsatz und Bauvorhaben auch andere Abmessungen gewählt werden können. Eine Mindestdicke von 5 mm sollte allerdings nicht unterschritten werden; nach oben ist die Dicke im Prinzip unbegrenzt.

Ausführungsbeispiele der Erfindung sind in den Figuren dargestellt. Die Figuren zeigen:
- Fig. 1: schematisiert eine Bauplatte gem. Erfindung in einer schichtweise aufgeschnittenen Darstellung;
- Fig. 2: einen Schnitt durch eine Bauplatte gem. Fig. 1;
- Fig. 3.: eine zweite Ausführungsform einer Bauplatte.

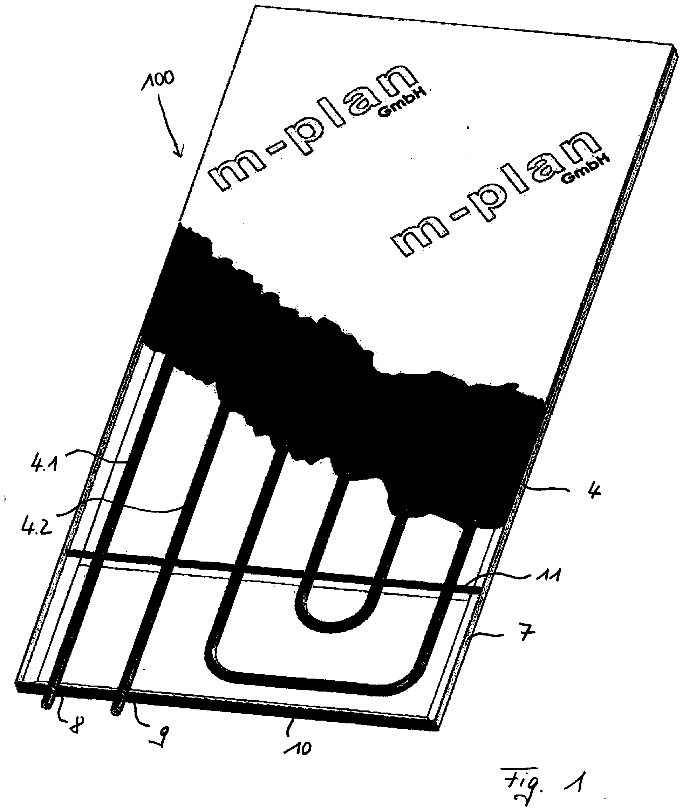

Figur 1 zeigt eine Bauplatte 100 mit einer Gesamtdicke von 20 bis 30 mm, die eine starre Mörtelplatte 4 umfasst, in der ein Rohrstrang 2 für ein Heiz- oder Kühlfluid eingebettet is. Anstelle eines Rohrstrangs kann auch ein Heizkabel oder eine Heizfolie oder eine ähnliche, einen Wärmegradienten innerhalb der Mörtelplatte 4 erzeugenden Vorrichtung vorgesehen sein. Die Bauplatte 100 ist zur Anbringung an Wände, Decken oder Fußböden bestimmt. Die Fläche der Bauplatte ist entsprechend dem Anwendungszweck zu variieren; Länge und Breite betragen beispielsweise 0,80 m x 1,20 m im Ausführungsbeispiel.

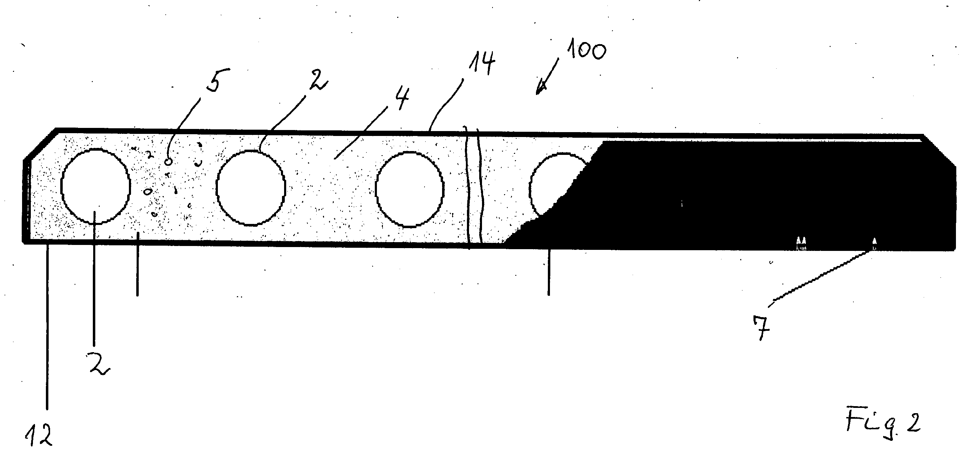

Da der erstarrte Mörtel gemäß seiner Zusammensetzung normalerweise nicht bruchfest ist, ist die Mörtelplatte 4 von einem Rahmen 7 umgeben, der aus vier gewinkelten, zu einem Rechteck zusammengefügten Blechprofilen besteht (vgl. Fig. 2). In den Rahmen 7 ist vor Einbringen des flüssigen Mörtelschlamms der Rohrstrang 2 eingelegt worden. Hierzu wird diesem eine passende Kurvatur gegeben. Im Ausführungsfall ist dies eine Spirale, bei der eine von einer Einlassbohrung 8 an der Schmalseite des Rahmens 7 ausgehende erste Hälfte 4.1 des Rohrstranges 4 einen Zulauf bildet, ein an einer Auslassbohrung 9 endende zweite Hälfte des Rohrstranges 4 einen Rücklauf 4.2 bildet, wobei Zulauf und Rücklauf des einsatzfertig gebogenen Rohrstranges 4 parallel laufen und benachbarte Teilstränge bilden. Einlass- und Auslassbohrung liegen auf derselben Schmalseite 10 der Bauplatte 100. Der eingebaute Rohrstrang 4 wird zur Fixierung auf einen oder mehrere quer laufende Positionsstege 11 aufgelegt. Als Material für den Rohrstrang 4 wird Kupfer oder korrosionsfester Stahl gewählt.

Die vom Rahmen 7 aufgespannte Fläche wird mit einem Flachabschnitt 12 aus Kunststofffolie oder Kraftpapier abgedichtet unterlegt und überspannt, so dass der in das Volumen des Rahmens 7 einfließende Mörtelschlamm bis zum Erstarren nicht abfließen kann. Wie aus Fig. 2 ersichtlich, ist der Rohrstrang 2 gänzlich von der Mörtelmasse umhüllt. Als Material für den Flachabschnitt 12 eignen sich auch Metallfolien, Pappe, Glasfaservlies oder Glasfaser-Gewebematten. Auch mehrschichtige Verbundwerkstoffe aus den vorstehend genannten Materialien oder anderen Stoffen können verwendet werden.
Wesentliches Merkmal der Mörtelplatte 4 ist die Zusammensetzung der Mörtelmischung. Ausgangsmaterial ist eine Mörtelmischung, die in Wasser anrührbar ist und, wie bekannt, aus Kalk, Gips, Zement und dergleichen angesetzt wird. Dieser Masse wird ein gekörnter Zuschlagstoff 5 mit einem hohen Anteil an elementaren Kohlenstoff, vorzugsweise aus gemahlener Kokskohle, beigemischt. Letzte wird aus Steinkohlenkoks etwa mit einer Korngrößenverteilung von 0,02 mm bis 3,5 mm gemahlen und ausgesiebt. Der Anteil dieses Zuschlagsstoffes 5 beträgt im ausgehärteten Zustand etwa 50 Vol.-%; der Anteil liegt im Bereich von 25 bis 70 Vol.-% der Mörtelmasse. Die Mörtelmasse erhält im ausgehärteten Zustand eine hohe Wärmeleitfähigkeit und damit verbesserte Wärmeabgabe-Eigenschaften.
Dabei ist hervorzuheben, dass die Wärmeleitfähigkeit der ausgehärteten Mörtelmasse je nach Erfordernissen variieren kann. Je höher der Kohlenstoffanteil ist, desto höher ist die Wärmeleitfähigkeit λ und damit die Wärmeabgabe pro Flächeneinheit.
Als technisch erreichbar und für den Einsatz geeignet haben sich λ-Werte (bei 40° Messtemperatur), von mehr als 1,8 W/(m•K) erwiesen. Der gemahlenen Kokskohle können auch andere gemahlene Kohlenstoffträger mit hohem Kohlenstoffgehalt beigemischt werden, z.B. entgaste Aktivkohle, Graphit, Anthrazit und dergleichen.
Nach dem Gießen des Mörtelschlammes in den abgedichteten Rahmen wird die Oberseite der erhärteten Fläche der Bauplatte mit einem weiteren Flächenabschnitt 14 aus gleichem oder ähnlichen Material wie dem des Flächenabschnitts 12 abgedeckt und mit dem Rahmen 7 abnehmbar verspannt oder verklebt. In die Mörtelmasse kann zusätzlich auch noch wenigstens eine Armierung aus einem Vlies, einem Gewebe oder einem Gelege eingebaut sein. Erweist sich die ausgehärtete Mörtelplatte als ausreichend bruchsicher, so kann der Rahmen 7 auch nach Art einer Springform abgenommen und für weitere Mörtelplattenherstellung verwendet werden.

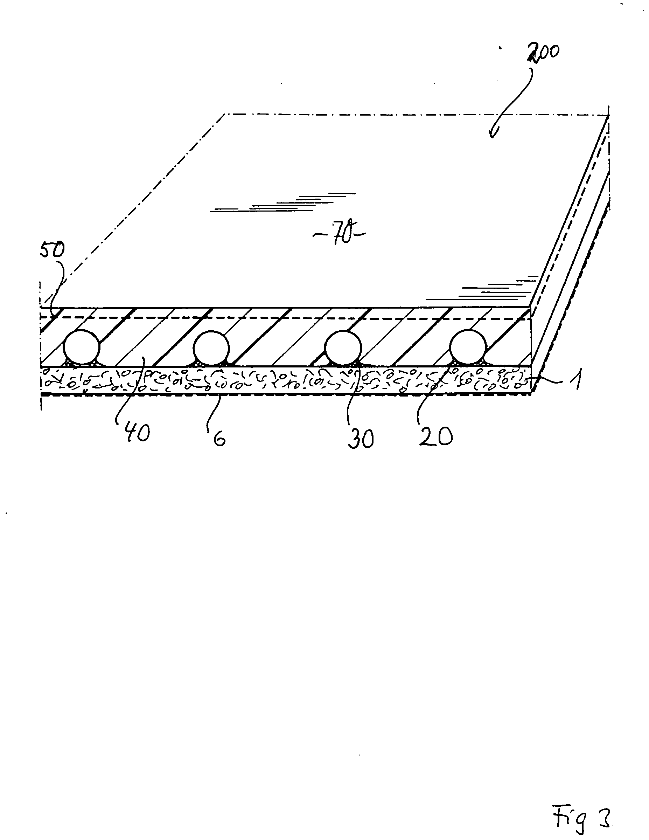

Ein weiteres Ausführungsbeispiel einer Bauplatte ist in der Figur 3 dargestellt. Die Figur zeigt schematisch einen Schnitt durch eine Bauplatte 200.

Die in der Figur dargestellte Bauplatte 200 mit einer Gesamtdicke von etwa 20 bis 50 mm umfasst eine Kernschicht 1, die aus Schaumglas besteht und eine geringe Wärmeleitfähigkeit besitzt (λ=0,04....0,06 W/(m•K)). Das Schaumglas Material ist zu einer Platte geformt oder geschnitten.

Auf der Vorderseite der Kernschicht 1 ist ein Rohrstrang 20, bestehend aus einer mäandrierenden Anordnung von Rohren, aufgeklebt. Die Verklebung 30 kann beispielsweise aus einer 1K-Epoxidharzmasse bestehen. Durch geeignete, an sich bekannte Maßnahmen können die unterschiedlichen Wärmeausdehnungskoeffizienten der Materialien berücksichtigt werden. Der Rohrstrang 20 ist eingebettet in eine Mörtelschicht 40 aus bekannten Werkstoffen, wie Kalk, Gips, Lehm oder dergleichen. Der Mörtelschicht 40, die der des Ausführungsbeispiels gem. Fig. 1 und 2 entspricht, ist ein Zuschlagstoff mit einem hohen Anteil an elementarem Kohlenstoff, zum Beispiel gemahlene Kokskohle, beigefügt worden. Der Anteil an Zuschlagsstoffen beträgt bis zu 50 Vol.-% der Mörtelschicht, wenn der ausgehärtete Zustand erreicht ist.

Die Mörtelschicht 40 kann mit einem Glasfaser-Gewebe 50 oder einem Vlies aus Glasfasern oder Kunststofffasern armiert sein.

Auf der der Mörtelschicht 40 gegenüberliegenden Rückwand der Kernschicht 1 ist eine Verstärkungsschicht 6 aufgeklebt, die aus einer Glasfasermatte (Gewebe, Gewirke, Gelege oder Vlies) besteht, die mit einer klebenden, aushärtenden Masse, zum Beispiel 1K-Epoxidharzkleber, getränkt wurde und zu einer dichten, klaren, dünnen Schicht ausgehärtet ist. Insgesamt kann die Kombination aus Schaumglas und Verstärkungsschicht mit einer Wärmeleitfähigkeit von 0,035 - 0,055 W/(m•K)) ausgestattet sein.
Die Herstellung kann mit oder ohne eine Rahmen 7 vorgenommen werden.

Insgesamt erreicht die Bauplatte 200, im Bereich der Beheizung und Kühlung von Räumen, ausgehend von einer Wand, dem Boden oder der Decke, eine hohe Wärmeabgabe oder Wärmeaufnahme pro m² und dient gleichzeitig als wärmedämmendes Element aufgrund der Kernschicht 1 aus Schaumglas, die zu der kalten Seite einer Wand aufgeklebt ist.

Auf der frei liegenden oberen Seite 70 der Bauplatte kann diese mit einer Tapete oder über eine Spachtelmasse mit einem keramischen Belag (nicht dargestellt), versehen werden.

## Patentansprüche

1. Bauplatte (100;200) mit eingebettetem Rohrstrang (2;20) für ein Heiz- oder Kühlfluid, Heizkabel oder einer ähnlichen, eingebetteten, einen Wärmegradienten erzeugenden Vorrichtung für die Raumheizung oder -kühlung bei Anbringung an Wände, Decken oder Fußböden, **dadurch gekennzeichnet, dass** die Bauplatte aus einer starren Mörtelplatte (4;40) und einem die erstarrte Mörtelmasse haltenden Rahmen (7)besteht, deren Mörtelmasse vor dem Erstarren ein wärmeleitungserhöhender, aus elementarem Kohlenstoff bestehender Zuschlagstoff (5)in einem Bereich von 25 bis 70 Vol.-% der Mörtelmasse beigemischt ist, wobei der Rahmen (7) aus einem Flachprofil oder aus einem zur Innenseite der Bauplatte (100;200) hin offenen Winkelprofil besteht, wobei für das Material des Rahmens (7) Metall- oder Kunststoffprofile verwendet werden.

2. Bauplatte nach Anspruch 1, **dadurch gekennzeichnet, dass** der Zuschlagstoff (5) zu mehr als 30 Vol.-%, vorzugsweise ausschließlich, aus gemahlenem Steinkohlenkoks besteht.

3. Bauplatte nach Anspruch 2, **dadurch gekennzeichnet, dass** die Korngröße des gemahlenen Steinkohlenkokses mit einer Korngrößenverteilung von 3,5 mm bis 0,02 mm gewählt ist.

4. Bauplatte nach einem der vorhergehenden Ansprüche, **dadurch gekennzeichnet, dass** die Wärmeleitfähigkeit λ der ausgehärteten Mörtelmasse bei mittlerer Temperatur der Mörtelmasse von 40°C größer als 1,8 W/(m•K) ist.

5. Bauplatte nach einem der vorhergehenden Ansprüche, welche in rechteckiger Form hergestellt ist und welche **dadurch gekennzeichnet, dass**:
• ein vom Einlass ausgehender und die erste Hälfte des Rohrstranges (2) umfassender Teil des Rohrstranges einen Zulauf bildet,
• ein am Auslass endender und die zweite Hälfte des Rohrstranges (2) umfassender Teil des Rohrstranges einen Ablauf bildet,
• wobei Zulauf und Ablauf in der Mörtelmasse in Form einer doppelten Kurvatur, nämlich als Spirale oder Mäanderlinie, geführt und vollständig eingebettet sind, bei der jeweils ein Teil der Zulaufleitung zu einem Teil der Ablaufleitung benachbart ist,
• und wobei Ein- und Auslass bei der Bauplatte auf derselben Seite liegen.

6. Bauplatte nach einem der vorhergehenden Ansprüche, **dadurch gekennzeichnet, dass** der Rohrstrang (2) aus einem Metallrohr besteht oder als Verbundrohr ein Metallrohr umfasst, oder aus einem Kunststoffrohr besteht.

7. Bauplatte nach einem der vorhergehenden Ansprüche, **dadurch gekennzeichnet, dass** das Metallprofil mit einer Kunststoff- oder Keramikbeschichtung versehen sein kann.

8. Bauplatte nach Anspruch nach einem der vorhergehenden Ansprüche, **dadurch gekennzeichnet, dass** die Mörtelmasse zusätzlich zwischen zwei auf die Mörtelmasse aufgelegten oder in den Rahmen eingespannten Flächengebilden gehalten ist.

9. Bauplatte nach Anspruch 8, **dadurch gekennzeichnet, dass** das Flächengebilde aus einem Flachabschnitt (12, 14) aus Kunststofffolie, Papier, Pappe oder Metallfolie oder -blech oder einem Verbundwerkstoff aus wenigstens zwei der vorgenannten Materialien besteht.

10. Bauplatte nach Anspruch 8, **dadurch gekennzeichnet, dass** das Flächengebilde aus einem Flachabschnitt (12, 14) aus einem Glasfaserverbund, nämlich aus Glasfaservlies oder aus einer Glasfaser-Gewebematte, besteht.

11. Bauplatte nach einem der vorhergehenden Ansprüche, **dadurch gekennzeichnet, dass** innerhalb der Mörtelmasse wenigstens eine Armierung aus einem Vlies, einem Gewebe oder einem Gelege in größter Flächenausdehnung der Bauplatte eingebaut ist.

12. Bauplatte nach einem der vorhergehenden Ansprüche, **dadurch gekennzeichnet, dass** die Mörtelplatte (40) einseitig mit einer Kernschicht (1) in Form einer Tafel belegt ist, die aus einem Leichtbaustoff besteht, nämlich aus Schaumglas, Schaumkunststoff oder Holzfasermaterial.

13. Bauplatte nach Anspruch 12, **dadurch gekennzeichnet, dass** das Schaumglas der Kernschicht (1) eine Dichte von 15 bis 200 kg/m³ besitzt.

## Claims

1. Construction board (100; 200) with an embedded pipeline conduit (2; 20) for a heating or cooling fluid, heating cable or similar embedded device generating a heat gradient and intended to heat or cool a room when attached to walls, ceilings or floors, **characterised in that** the construction board consists of a rigid plaster board (4; 40) and a frame (7) containing the set plaster compound, the plaster compound of which, prior to setting, has admixed therein, in a range of 25 to 70 vol.% of the plaster compound, a thermal conductivity-increasing additive (5) consisting of elemental carbon, wherein the frame (7) consists of a flat profile or of an angular profile open towards the inside of the construction board (100; 200), wherein metal or synthetic material profiles are used for the material of the frame (7).

2. Construction board as claimed in claim 1, **characterised in that** the additive (5) consists of milled coke up to more than 30 vol.%, preferably exclusively thereof.

3. Construction board as claimed in claim 2, **characterised in that** the grain size of the milled coke is selected to have a grain size distribution of 3.5 mm to 0.02 mm.

4. Construction board as claimed in any one of the preceding claims, **characterised in that** the thermal conductivity λ of the hardened plaster compound, at an average temperature of the plaster compound of 40°C, is greater than 1.8 W/(m·K).

5. Construction board as claimed in any one of the preceding claims, which is produced in rectangular form and which is **characterised in that**:
• a part of the pipeline conduit (2) issuing from the inlet and including the first half of the pipeline conduit forms an intake,
• a part of the pipeline conduit (2) terminating at the outlet and including the second half of the pipeline conduit forms a drain,
• wherein the intake and drain are placed and fully embedded in the plaster compound in the form of a double curve, namely as a spiral or serpentine, in which in each case a part of the intake line is adjacent to a part of the drain line,
• and wherein the inlet and outlet lie on the same side of the construction board.

6. Construction board as claimed in any one of the preceding claims, **characterised in that** the pipeline conduit (2) consists of a metal pipe or includes a metal pipe as a composite pipe, or consists of a synthetic material pipe.

7. Construction board as claimed in any one of the preceding claims, **characterised in that** the metal profile can be provided with a synthetic material or ceramic coating.

8. Construction board as claimed in any one of the preceding claims, **characterised in that** the plaster compound is additionally held between two planar formations laid onto the plaster compound or clamped in the frame.

9. Construction board as claimed in claim 8, **characterised in that** the planar formation consists of a flat portion (12, 14) made from synthetic material film, paper, cardboard or metal foil or sheet metal or of a composite material of at least two of the above-mentioned materials.

10. Construction board as claimed in claim 8, **characterised in that** the planar formation consists of a flat portion (12, 14) made from a glass-fibre composite, namely from a glass fibre non-woven fabric or from a glass fibre woven mat.

11. Construction board as claimed in any one of the preceding claims, **characterised in that** at least one reinforcement made from a non-woven fabric, a woven fabric or a lay-up fabric is incorporated within the plaster compound over the largest surface area of the construction board.

12. Construction board as claimed in any one of the preceding claims, **characterised in that** the plaster board (40) is backed on the one side with a core layer (1) in the form of a panel consisting of a lightweight construction material, namely of foam glass, cellular plastics material or wood fibre material.

13. Construction board as claimed in claim 12, **characterised in that** the foam glass of the core layer (1) has a density of 15 to 200 kg/m³.

## Revendications

1. Panneau de construction (100 ; 200) avec une canalisation encastrée (2 ; 20) pour un fluide de chauffage ou de refroidissement, un câble chauffant ou un dispositif similaire encastré générant un gradient de chaleur pour le chauffage ou refroidissement de locaux lors de l'application sur des parois, plafonds ou planchers, **caractérisé en ce que** le panneau de construction se compose d'une plaque de mortier (4 ; 40) rigide et d'un cadre (7) maintenant le mortier solidifié, auquel mortier est ajouté avant la solidification un additif (5) augmentant la conduction thermique, composé de carbone élémentaire dans une plage de 25 à 70 % en volume du mortier, dans lequel le cadre (7) se compose d'un profil plat ou d'un profil angulaire ouvert vers le côté intérieur du panneau de construction (100 ; 200), dans lequel des profils en métal ou plastique sont utilisés pour le matériau du cadre (7).

2. Panneau de construction selon la revendication 1, **caractérisé en ce que** l'additif (5) se compose à plus de 30 % en volume, de préférence exclusivement, en coke de houille broyé.

3. Panneau de construction selon la revendication 2, **caractérisé en ce que** la granulométrie du coke de houille broyé est choisie avec une répartition granulométrique de 3,5 mm à 0,02 mm.

4. Panneau de construction selon l'une quelconque des revendications précédentes, **caractérisé en ce que** la conductivité thermique λ du mortier durci est pour une température moyenne du mortier supérieure de 40 °C à 1,8 W/(m·K).

5. Panneau de construction selon l'une quelconque des revendications précédentes, lequel est fabriqué en forme rectangulaire et lequel est **caractérisé en ce que** :
- une partie de la canalisation partant de l'entrée et comprenant la première moitié de la canalisation (2) forme une arrivée,
- une partie de la canalisation se terminant à la sortie et comprenant la deuxième moitié de la canalisation (2) forme une évacuation,
- dans lequel l'arrivée et l'évacuation sont guidées dans le mortier sous la forme d'une double courbure, à savoir en tant que spirale ou ligne de méandres, et entièrement encastrées, dans lequel respectivement une partie de la conduite d'arrivée est adjacente à une partie de la conduite d'évacuation,
- et dans lequel l'entrée et la sortie du panneau de construction se trouvent du même côté.

6. Panneau de construction selon l'une quelconque des revendications précédentes, **caractérisé en ce que** la canalisation (2) se compose d'un tube métallique ou comprend un tube métallique en tant que tube composite, ou se compose d'un tube en plastique.

7. Panneau de construction selon l'une quelconque des revendications précédentes, **caractérisé en ce que** le profil métallique peut être doté d'un revêtement en plastique ou céramique.

8. Panneau de construction selon l'une quelconque des revendications précédentes, **caractérisé en ce que** le mortier est maintenu en outre entre deux structures planes posées sur le mortier ou serrées dans le cadre.

9. Panneau de construction selon la revendication 8, **caractérisé en ce que** la structure plane se compose d'une section plane (12, 14) en film plastique, papier, carton ou film ou tôle métallique ou d'un matériau composite en au moins deux des matériaux susmentionnés.

10. Panneau de construction selon la revendication 8, **caractérisé en ce que** la structure plane se compose d'une section plane (12, 14) en un composite en fibres de verre, à savoir en non-tissé en fibres de verre ou en une natte de tissu en fibres de verre.

11. Panneau de construction selon l'une quelconque des revendications précédentes, **caractérisé en ce qu'**à l'intérieur du mortier, au moins un renfort en non-tissé, tissu ou nappe est intégré dans la plus grande zone de surface du panneau de construction.

12. Panneau de construction selon l'une quelconque des revendications précédentes, **caractérisé en ce que** la plaque de mortier (40) est occupée d'un côté par une couche centrale (1) en forme de panneau, qui se compose d'un matériau de construction léger, à savoir en verre cellulaire, plastique cellulaire ou matériau en fibres de bois.

13. Panneau de construction selon la revendication 12, **caractérisé en ce que** le verre cellulaire de la couche centrale (1) a une densité de 15 à 200 kg/m³.
